(19) Europäisches Patentamt
European Patent Office
Office européen des brevets

(11) **EP 2 798 498 B1**

(12) **FASCICULE DE BREVET EUROPEEN**

(45) Date de publication et mention de la délivrance du brevet:
**03.02.2021 Bulletin 2021/05**

(21) Numéro de dépôt: **12812290.0**

(22) Date de dépôt: **04.12.2012**

(51) Int Cl.:
***G06F 11/34*** ***(2006.01)***

(86) Numéro de dépôt international:
**PCT/FR2012/052789**

(87) Numéro de publication internationale:
**WO 2013/098500 (04.07.2013 Gazette 2013/27)**

(54) **MESURE DE PERFORMANCE D'UNE INFRASTRUCTURE INFORMATIQUE**

LEISTUNGSMESSUNG EINER DATENVERARBEITUNGSINFRASTRUKTUR

PERFORMANCE MEASUREMENT OF A COMPUTING INFRASTRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2011 FR 1162548**

(43) Date de publication de la demande:
**05.11.2014 Bulletin 2014/45**

(73) Titulaire: **Bull SAS**
**78340 Les Clayes-sous-Bois (FR)**

(72) Inventeurs:
• **DEMEILLIEZ, Bruno**
  **F-78340 Les Clayes Sous Bois (FR)**
• **MENIGOT, Gilles**
  **F-78340 Les Clayes Sous Bois (FR)**

(74) Mandataire: **A.P.I. Conseil**
**Immeuble Newton**
**4, rue Jules Ferry**
**64000 Pau (FR)**

(56) Documents cités:
**US-A1- 2007 022 407    US-A1- 2008 126 390**
**US-A1- 2009 287 791**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine des tests de performance d'infrastructures informatiques.

De telles infrastructures informatiques sont par exemple des calculateurs hautes performances, généralement désignés sous leur appellation anglo-saxonne « *clusters* » HPC (HPC étant le sigle de « *High Performance Computing* »). Il peut également s'agir de réseaux de serveurs (par exemple Web).

Les tests de performance (« Benchmark » en terminologie anglo- saxonne) peuvent avoir pour objectif de résoudre des problèmes de performance existants d'une application, de dimensionner une infrastructure nécessaire pour une application en fonction d'une utilisation donnée, de valider les performances, l'endurance, la robustesse d'une application, de comparer des évolutions (briques logicielles, version d'application, optimisations, etc.), ou autre.

Les applications (ou logiciels) de test de performance permettent de simuler plusieurs utilisateurs simultanément. Par exemple, pour une infrastructure informatique d'application Web (un réseau de serveurs Web), l'application de test est capable d'envoyer vers l'infrastructure un très grand nombre de requêtes (par exemple au format HTML), comme si elles provenaient d'utilisateurs simultanés différents.

Ces applications permettent de créer un ou plusieurs scénarios de test en choisissant une ou plusieurs requêtes à faire exécuter par l'architecture testée et en choisissant un débit de requêtes pour chaque scénario.

Les applications de test effectuent un certain nombre de mesures (temps de réponse de l'infrastructure, taux d'erreurs, ou autre) et génèrent un rapport de test.

Une application de test connue, développée par *Apache Software Foundation,* est *JMeter.* Il s'agit d'un outil de test de charge en langage JAVA.

De manière générale, un test de performance d'infrastructure informatique, peut se dérouler en plusieurs étapes.

Dans une première étape, la stratégie de test est définie, avec notamment :

-    la définition du contexte technique de l'architecture testée,
-    le choix d'un ou plusieurs scénarios et la pondération de ces scénarios (c'est-à-dire la définition de l'importance relative des uns par rapport aux autres),
-    la détermination de la volumétrie cible (c'est-à-dire le débit de requêtes souhaité pour le test),
-    la détermination des types de requêtes à envoyer en fonction des objectifs du test,
-    la définition de l'architecture testée,
-    la détection des pré-requis.

Ensuite, l'environnement du test est mis en place. Il s'agit par exemple d'appliquer une certaine configuration à l'architecture informatique testée pour pouvoir tester cette configuration en particulier.

Les scénarios de test sont ensuite définis au moyen d'applications de test (par exemple JMeter) puis modifiés pour être paramétrables. Ensuite, à partir de ces définitions, les jeux d'injection d'instructions sont construits. Il s'agit de définir les paramètres des requêtes à envoyer vers l'infrastructure testée pour mettre en œuvre les scénarios (par exemple sous forme de fichier CSV, sigle de « *Comma-separated values* », ou d'un export d'une base de données).

Pour effectuer les mesures de performances, il peut être nécessaire de développer des sondes de mesure spécifiques à une grandeur particulière.

Des scripts d'ordonnancement sont ensuite générés pour exécuter de façon chronologique les tâches nécessaires à la mise en œuvre des requêtes selon les jeux d'injection.

Enfin, les requêtes sont exécutées lors d'une « *campagne de tir* » et les résultats sont mesurés et analysés pour générer un rapport.

Avant le lancement de la campagne de tir, la plupart des étapes évoquées ci-dessus nécessitent l'intervention d'un utilisateur qui supervise le test.

En effet, outre la définition la stratégie de test (scénarios), l'utilisateur doit spécifier de manière très précise l'ensemble des paramètres nécessaires à l'application de test pour lancer de manière coordonnée l'ensemble des instructions vers l'architecture testée.

Pour une campagne de tir légère, cela peut se concevoir, si le paramétrage est réalisé par un utilisateur très expérimenté.

Par contre, lorsque l'architecture informatique à tester est complexe et comporte un très grand nombre de matériels et de logiciels, comme c'est le cas pour les clusters HPC, les scénarios à exécuter et les instructions sous-jacentes son démultipliées. La tâche peut alors devenir presque impossible, même pour un utilisateur confirmé.

Le document US2009/0287791 concerne des méthodes pour effectuer des tests automatiques de charge et d'utilisabilité ; un navigateur ayant un identifiant unique est détecté et un script est injecté dans la réponse HTML générée par la page affichée dans le navigateur. Le script injecté ouvre la page et les liens sur la page, puis sélectionne un lien dans la page ouverte. Lors de la sélection d'un lien, le script attend alors une période de temps avant d'appeler une fonction associée au lien sélectionné.

Le document US2008/0126390 concerne une méthode de test d'une application basée sur l'architecture axée sur un service. Des paramètres d'entrée d'un utilisateur dans un fichier de configuration sont utilisés pour générer un script de test pour tester l'application, des données d'un fichier de test sont insérées dans un modèle du fichier de document XML à des endroits spécifiques.

Il existe donc un besoin pour améliorer les tests d'infrastructures informatiques, notamment pour les clusters HPC.

La présente invention s'inscrit dans ce cadre.

En particulier, l'invention concerne un procédé de génération d'un fichier d'injection de requêtes pour un test d'infrastructure informatique, ledit test d'infrastructure informatique comportant une exécution des requêtes du fichier d'injection afin de mesurer la performance de l'infrastructure informatique en fonction des résultats d'exécution de ces requêtes, le procédé de génération de fichier d'injection de requêtes comportant les étapes suivantes de :

- lecture d'un fichier de configuration de test, par une unité de traitement, comportant au moins une définition d'au moins un scénario de test, ledit fichier de configuration comportant au moins un paramètre de test pour chaque scénario, l'au moins un paramètre de test correspondant à une variable durée_requête permettant de calculer une durée d'attente variable après une requête en soustrayant une durée réelle de la requête à la valeur de la variable durée_requête ;
- initialisation du fichier d'injection de requêtes à partir d'un fichier de base comportant des marqueurs, et ayant un format adapté à un dispositif d'injection avec des champs à remplir ;
- calcul d'au moins une variable de test pour chaque scénario de test du fichier de configuration, à partir de l'au moins un paramètre de test pour chaque scénario, ladite variable de test permettant au dispositif d'injection de cadencer les requêtes envoyées vers l'infrastructure informatique ;
- une étape de substitution d'au moins un marqueur du fichier de base initialisant le fichier d'injection de requêtes par la variable de test calculée, et
- génération, lorsque tous les scénarios de test ont été considérés, du fichier d'injection de requêtes, par un module d'ordonnancement, ledit fichier d'injection de requêtes comportant une pluralité de requêtes à destination de l'infrastructure informatique à partir d'au moins ladite au moins une variable de test calculée.

Ainsi, il est possible de générer un fichier d'injection avec les paramètres de l'injection, sans qu'il soit nécessaire pour l'utilisateur de configurer le module d'injection mettant en œuvre l'envoi des requêtes à destination de l'infrastructure informatique testée (campagne de tir de requêtes).

Une infrastructure informatique peut s'entendre au sens matériel et/ou au sens logiciel. Plusieurs aspects d'une telle infrastructure peuvent être testés : capacité à répondre à un volume de requêtes (test de charge), capacité à répondre à un type de requête après une modification (logicielle et/ou matérielle), ou autre.

Une infrastructure informatique peut être testée dans sa totalité ou en partie. Une infrastructure peut être testée selon une ou plusieurs configurations disponibles.

En générant un fichier d'injection comportant les variables d'injection déjà calculées, il n'est plus nécessaire pour l'utilisateur d'intervenir pour configurer le module d'injection pour cadencer la campagne de tir.

Il est ainsi possible de maîtriser de façon très précise le nombre de scénarios exécutés par unité de temps.

Par exemple, le fichier d'injection est initialisé à partir d'un fichier de base.

La génération du fichier d'injection est ainsi simplifiée.

Le procédé peut en outre comporter une étape de substitution d'au moins un marqueur du fichier de base par une variable de test calculée.

Par exemple, au moins l'une des variables de test parmi les suivantes est calculée :

- un nombre de processus à faire exécuter par l'infrastructure informatique,
- une durée de démarrage de processus à faire exécuter par l'infrastructure informatique,
- une durée de test, et
- une durée d'itération d'un scénario de test durant le test.

Par exemple, l'infrastructure informatique est un calculateur hautes performances (ou cluster HPC).

Un **deuxième aspect** de l'invention concerne un procédé de test d'infrastructure informatique par exécution du fichier d'injection de requête généré selon la revendication 7.

Un **troisième aspect** de l'invention concerne des programmes d'ordinateur ainsi que des produits programme d'ordinateur et des supports de stockage pour de tels programmes et produits, permettant la mise en œuvre de procédés selon le premier et/ou le deuxième aspect de l'invention, lorsque les programmes sont stockés dans une mémoire d'un dispositif de génération de fichier d'injection et/ou de mesure de test de performance et exécutés par un processeur de tels dispositifs.

Un **quatrième aspect** de l'invention concerne un dispositif de génération de fichier d'injection de requêtes pour un test d'infrastructure informatique ledit test d'infrastructure informatique comportant une exécution des requêtes du fichier d'injection de requêtes afin de mesurer la performance de l'infrastructure informatique en fonction des résultats d'exécution de ces requêtes, le dispositif de génération de fichier d'injection de requêtes comportant une unité de traitement configurée pour lire un fichier de configuration de test comportant :

- au moins une définition d'au moins un scénario de test, ledit fichier de configuration comportant au moins un paramètre de test pour chaque scénario, l'au moins un paramètre de test correspondant à une variable durée_requête permettant de calculer une durée d'attente variable après une requête en soustrayant une durée réelle de la requête à la valeur de la variable durée_requête ;
- initialiser le fichier d'injection de requêtes à partir d'un fichier de base comportant des marqueurs et ayant un format adapté à un dispositif d'injection avec des champs à remplir;
- calculer au moins une variable de test pour chaque scénario de test du fichier de configuration, à partir de l'au moins un paramètre de test pour chaque scénario, ladite variable de test permettant au dispositif d'injection de cadencer les requêtes envoyées vers l'infrastructure informatique,
- substituer au moins un marqueur du fichier de base initialisant le fichier d'injection de requêtes par la variable de test calculée, et
- générer, lorsque tous les scénarios de test ont été considérés, le fichier d'injection de requêtes, ledit fichier d'injection de requêtes comportant une pluralité de requêtes à destination de l'infrastructure informatique, à partir d'au moins ladite au moins une variable de test calculée.

Par exemple, l'unité de traitement est en outre configurée pour initialiser le fichier d'injection à partir d'un fichier de base.

L'unité de traitement peut en outre être configurée pour substituer au moins un marqueur du fichier de base par une variable de test calculée.

Au moins l'une des variables suivantes peut être calculée :

- un nombre de processus à faire exécuter par l'infrastructure informatique,
- une durée de démarrage de processus à faire exécuter par l'infrastructure informatique,
- une durée de test, et
- une durée d'itération d'un scénario de test durant le test.

Un **cinquième aspect** de l'invention concerne un dispositif de mesure de performance d'infrastructure selon la revendication 13.

Un **sixième aspect** de l'invention concerne un système de mesure de performance d'infrastructure informatique comportant :

- - un dispositif de génération de fichier d'injection selon le quatrième aspect, et
- - un dispositif de mesure de performance selon le cinquième aspect.

Les objets selon les deuxième, troisième, quatrième, cinquième et sixième aspects de l'invention procurent au moins les mêmes avantages que ceux procurés par le procédé selon le premier aspect. Les dispositifs et le système peuvent comporter des moyens pour la mise en œuvre de caractéristiques optionnelles évoquées pour le premier ou le deuxième aspect en termes de procédé.

D'autres caractéristiques et avantages de l'invention apparaîtront à la lecture de la

L'étape « injecter » appelle l'exécution du fichier d'injection par le dispositif d'injection.

L'étape « copier » consiste à calculer les paramètres nécessaires à la génération du fichier d'injection.

Lors de cette étape, le module d'ordonnancement lit le fichier de configuration 15 et prépare le fichier d'injection 12 à destination du dispositif d'injection. Pour chaque scénario dans le fichier de configuration, des variables d'injection sont calculées afin de les intégrer au fichier d'injection et permettre au dispositif d'injection de cadencer les instructions envoyées vers l'infrastructure informatique testée.

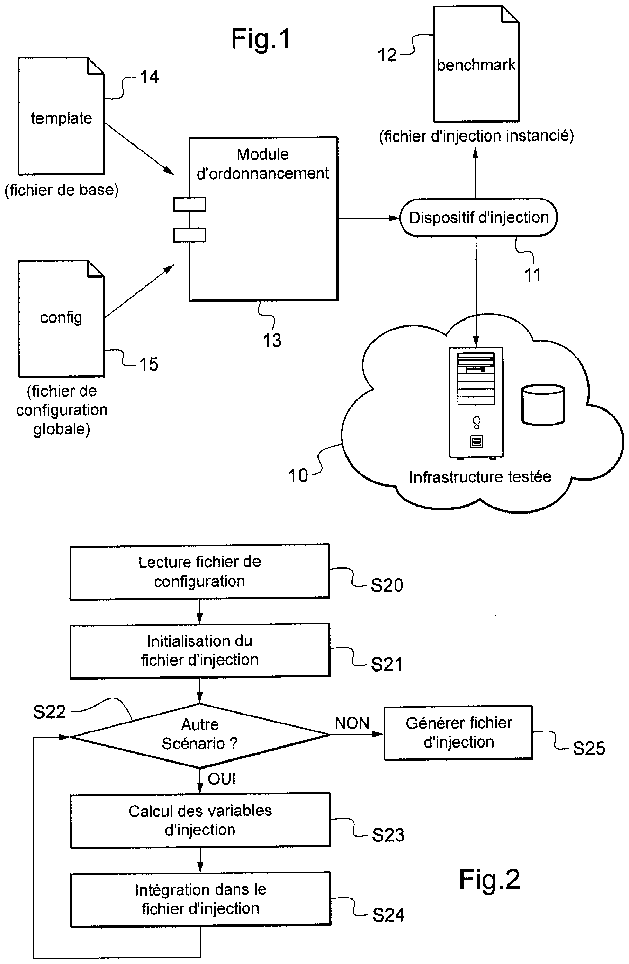

La **figure 2** est un organigramme d'étapes mises en œuvre lors de la génération du fichier d'injection. Ces étapes sont par exemple mises en œuvre par le module d'ordonnancement.

Lors de l'étape S20, le fichier de configuration est lu pour connaître l'ensemble des scénarios à exécuter lors du test et connaître les paramètres de ces scénarios. Ensuite, lors de l'étape S21, le fichier d'injection est initialisé sur la base d'un fichier de base. Ce fichier de base peut par exemple avoir un format adapté au dispositif d'injection avec des champs à remplir.

Lors de l'étape S22, il est déterminé s'il reste des scénarios à traiter dans le fichier de configuration. Si c'est le cas (OUI), un calcul des variables d'injection est effectué lors de l'étape S23 en fonction des paramètres du scénario considéré dans le fichier de configuration.

Les variables calculées sont ensuite intégrées au fichier d'injection lors de l'étape S24. Par exemple, il s'agit de substituer dans le fichier de configuration des marqueurs par des valeurs calculées (par exemple, remplacer le marqueur %NOMBRE_THREADS% par la valeur 12).

Lorsque tous les scénarios ont été considérés (étape S22, NON), le fichier d'injection est généré lors de l'étape S25 puis envoyé vers le dispositif d'injection pour son exécution. Si la génération du fichier d'injection et l'injection sont mises en œuvre par le même dispositif, le fichier généré est transmis au module mettant en œuvre l'injection.

Le calcul automatique des variables d'injection permet de s'affranchir de l'intervention d'un utilisateur pour paramétrer complètement le dispositif d'injection. Après l'intégration des variables d'injection dans le fichier d'injection, la campagne de tir est intégralement décrite dans le fichier d'injection. Ce fichier peut par exemple être au format XML (« eXtended Markup Langage »).

Une fois le fichier d'injection généré, il peut être modifié, via une interface utilisateur du dispositif d'injection.

Un scénario de test comporte un groupe de processus légers (« threads » en terminologie anglo-saxonne). Ces groupes sont caractérisés notamment par :

- le nombre de processus,
- la durée de démarrage des processus (durée aussi connue sous le nom de « rampe » ou « ramp up » en anglais,
- le nombre d'itération du scénario que réalise chaque processus,
- la durée de l'injection (qui correspond à la durée du scénario multipliée le nombre d'itérations, à laquelle s'ajoute une partie de la durée de la rampe),
- le délai avant le démarrage de l'injection,
- une liste d'actions à exécuter (requêtes) qui constituent le scénario.

Les processus d'un même groupe exécutent le même scénario de manière répétitive.

Un scénario de test peut notamment se définir selon :

- la mesure de l'heure de début du scénario, au début du scénario,
- la mesure de l'heure de début de la requête, avant chaque requête,
- une ou plusieurs requêtes (actions) qui consistent par exemple à émettre une requête HTTP vers un serveur Web,
- après chaque requête, une attente variable qui permet de conserver le débit constant,
- après chaque attente variable, une attente fixe qui simule le temps de réflexion et de saisie de l'utilisateur de l'infrastructure informatique testée,
- à la fin du scénario, une attente variable qui permet de conserver le débit constant.

La durée d'attente variable après une requête est calculée en soustrayant la durée réelle de la requête à la valeur de la variable d'injection DUREE_REQUETE, selon la formule :
DUREE_REQUETE - (Heure courante - Heure de début de la requête).

Par exemple, si la variable DUREE_REQUETE vaut 2000 ms et que la durée réelle de la requête est de 450 ms, l'attente sera de 1550 ms. L'unité donnée ici est la milliseconde, mais peut être différente, par exemple afin de s'adapter au format d'entrée (fichier de configuration) ou de sortie.

La durée d'attente variable en fin de scénario est calculée en soustrayant la durée réelle du scénario à la valeur de la variable d'injection DUREE_ITERATION, selon la formule :
DUREE_ITERATION - (Heure courante - Heure de début du scénario).

Par exemple, si la variable DUREE_ITERATION vaut 60000 ms et que la durée réelle de la requête est de 20000 ms, l'attente sera de 40000 ms.

Afin de maîtriser le nombre d'itérations exécutés dans un temps donné (débit) pour un scénario, les variables d'injection sont calculées en fonction des paramètres du scénario.

Le fichier de configuration définit la liste des scénarios devant être traités, par exemple trois scénarios S1, S2 et S3 : SCENARIOS = "S1 S2 S3".

Les paramètres des scénarios sont définis dans le fichier de configuration et sont préfixés par le nom du scénario et le caractère '_'.

Lors de la lecture des paramètres, le préfixe et le caractère '_' sont supprimés.

Les paramètres d'un scénario sont par exemple :

- DELAI_TIR : délai avant le démarrage de la campagne de tir,
- DUREE_TIR : durée souhaitée de la campagne de tir,
- DEBIT_TIR : débit de la campagne de tir, en scénarios par heure,

- DUREE_REQUETE : durée maximale d'une requête, utilisée pour calculer un temps d'attente variable en fonction de la durée réelle de la requête, afin de conserver un débit d'injection constant,
- NOMBRE_REQUETE : nombre de requêtes (par exemple http) da ns le scénario,
- DUREE_ATTENTE1 : durée de l'attente de type 1, correspondant à une attente fixe et simulant une attente courte,
- NOMBRE_ATTENTE1 : nombre d'attentes de type 1 dans le scénario,
- DUREE_ATTENTE2 : durée de l'attente de type 2, correspondant à une attente fixe et simulant une attente moyenne,
- NOMBRE_ATTENTE2 : nombre d'attentes de type 2 dans le scénario,
- DUREE_ATTENTE3 : durée de l'attente de type 3, correspondant à une attente fixe et simulant une attente longue,
- NOMBRE_ATTENTE3 : nombre d'attentes de type 3 dans le scénario,
- DUREE_ATTENTE4 : durée de l'attente de type 4, correspondant à une attente fixe et simulant une attente très longue,
- NOMBRE_ATTENTE4 : nombre d'attentes de type 4 dans le scénario,
- DUREE_TEMPO : durée de temporisation en fin de scénario, utilisée pour calculer un temps d'attente variable en fonction des durées théorique et réelle de l'itération, afin de conserver un débit d'injection constant.

Pour chaque scénario, les variables d'injection calculées peuvent être:

- NOMBRE_THREADS : nombre de processus devant être exécutés, calculé en fonction des paramètres du scénario,
- DUREE_RAMPE : durée du démarrage des processus, calculée en fonction des paramètres du scénario
- NOMBRE_ITERATIONS : nombre d'itérations du scénario devant être exécutées par chaque thread,
- DUREE_TIR : durée réelle du tir, calculé en fonction des paramètres du scénario,
- DELAI_TIR : valeur non modifiée par rapport au paramètre du scénario,
- DUREE_REQUETE : valeur non modifiée par rapport au paramètre du scénario,
- DUREE_ATTENTE1 : valeur non modifiée par rapport au paramètre du scénario,
- DUREE_ATTENTE2 : valeur non modifiée par rapport au paramètre du scénario,
- DUREE_ATTENTE3 : valeur non modifiée par rapport au paramètre du scénario,
- DUREE_ATTENTE4 : valeur non modifiée par rapport au paramètre du scénario,
- DUREE_ITERATION : durée totale d'une itération du scénario, calculée en fonction des paramètres du scénario.

Ces variables peuvent être calculées selon les formules suivantes :

$$- \text{DUREE\_SCENARIO} = (\text{DUREE\_REQUETE} * \text{NOMBRE\_REQUETE}) + (\text{DUREE\_ATTENTE1} * \text{NOMBRE\_ATTENTE1}) + (\text{DUREE\_ATTENTE2} * \text{NOMBRE\_ATTENTE2}) + (\text{DUREE\_ATTENTE3} * \text{NOMBRE\_ATTENTE3}) + (\text{DUREE\_ATTENTE4} * \text{NOMBRE\_ATTENTE4}),$$

[0068] - NOMBRE_THREADS = (((DUREE_SCENARIO + DUREE_TEMPO) * DEBIT_TIR) + 3599000) / 3600000, (la présence des valeurs 3599000 et 3600000 se justifie par l'arrondi de la variable à l'entier supérieur),

$$- \text{DUREE\_ITERATION} = (\text{NOMBRE\_THREADS} * 3600000) / \text{DEBIT\_TIR},$$

[0069] - NOMBRE_ITERATIONS = $DUREE_TIR / DUREE_ITERATION

```
Si NOMBRE_ITERATIONS <= 0
NOMBRE_ITERATIONS = 1
Fin Si
Si NOMBRE_ITERATIONS = 1
DUREE_ITERATION = DUREE_SCENARIO
Fin Si
Si NOMBRE_THREADS > 1
DUREE_RAMPE = DUREE_ITERATION
DUREE_RAMPE_REELLE = (DUREE_ITERATION /
NOMBRE_THREADS) * (NOMBRE_THREADS - 1)
```

EP 2 798 498 B1

Sinon

    DUREE_RAMPE = 0
    DUREE_RAMPE_REELLE = 0

Fin Si

-   DUREE_TIR = DUREE_RAMPE_REELLE + (DUREE_ITERATION *
    NOMBRE_ITERATIONS).

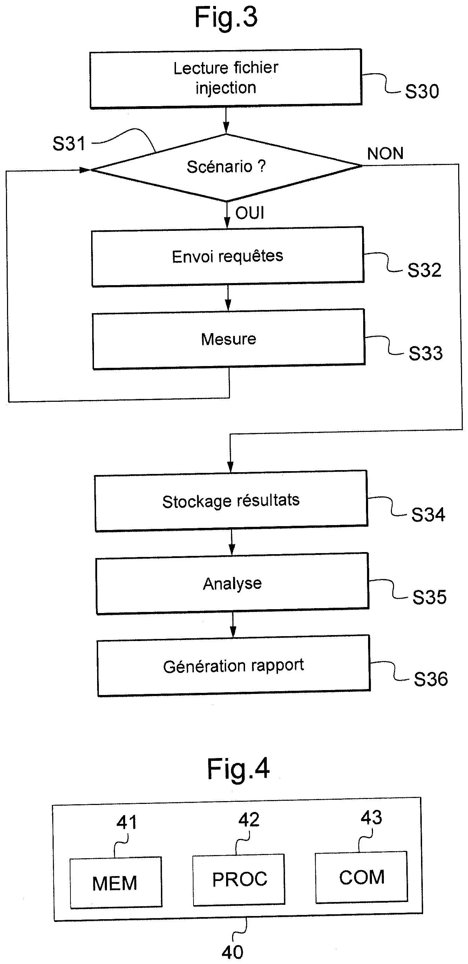

La **figure 3** est un organigramme d'étapes mise en œuvre pour un procédé de test d'infrastructure informatique selon des modes de réalisation.

Lors d'une étape S30, un fichier d'injection, généré comme décrit ci-avant et reçu, ouvert et lu pour déterminer lors de l'étape S31, un premier scénario à exécuter (OUI).

Les requêtes du scénario sont ensuite envoyées lors de l'étape S32, conformément au scénario et au paramétrage de celui-ci.

Une étape de mesure S33 est alors mise en œuvre pour récupérer des résultats de mesure de performance.

L'étape S31 est alors de nouveau exécutée pour déterminer s'il reste encore un ou plusieurs scénarios à mettre en œuvre, si c'est le cas (OUI), les étapes S32 et S33 sont de nouveau mises en œuvre, sinon (NON), une étape S34 de stockage des résultats de mesure est exécutée.

Les résultats obtenus et stockés sont ensuite analysés lors de l'étape S35 et un rapport de test de performance est généré lors de l'étape S36.

Un programme d'ordinateur pour la mise en œuvre d'un procédé selon un mode de réalisation de l'invention peut être réalisé à partir notamment des organigrammes des figures 2 et 3 et de la présente description détaillée.

Un dispositif de génération de fichier d'injection ou de test de performance d'architecture informatique selon un mode de réalisation est décrit en référence à la **figure 4.**

Le dispositif 40 de la figure 4 comporte une unité de mémoire 41 (MEM). Cette unité de mémoire comporte une mémoire vive pour stocker de manière non durable des données de calcul utilisées lors de la mise en œuvre d'un procédé conforme à l'invention, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 42 (PROC) du dispositif. Par exemple, l'unité de mémoire peut stocker un fichier de base « *template* » ou un fichier d'injection comme décrit précédemment.

Le dispositif comporte par ailleurs une unité de communication 43 (COM), par exemple pour recevoir des fichiers d'injection et/ou des résultats de mesure de performance, et/ou pour envoyer des requêtes vers une infrastructure informatique à tester.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en oeuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

**Revendications**

1.  Procédé de génération d'un fichier d'injection de requêtes (12) pour un test d'infrastructure informatique (10), ledit test d'infrastructure informatique (10) comportant une exécution des requêtes du fichier d'injection (12) afin de mesurer la performance de l'infrastructure informatique (10) en fonction des résultats d'exécution de ces requêtes, le procédé de génération de fichier d'injection de requêtes (12) comportant les étapes suivantes de :

    - lecture (S20) d'un fichier de configuration de test (15), par une unité de traitement, comportant au moins une

7

définition d'au moins un scénario de test, ledit fichier de configuration (15) comportant au moins un paramètre de test pour chaque scénario, l'au moins un paramètre de test correspondant à une variable durée_requête permettant de calculer une durée d'attente variable après une requête en soustrayant une durée réelle de la requête à la valeur de la variable durée_requête ;

- initialisation (S21) du fichier d'injection de requêtes (12) à partir d'un fichier de base (14) comportant des marqueurs, et ayant un format adapté à un dispositif d'injection (11) avec des champs à remplir ;

- calcul (S23) d'au moins une variable de test pour chaque scénario de test du fichier de configuration (15), à partir de l'au moins un paramètre de test pour chaque scénario, ladite variable de test permettant au dispositif d'injection (11) de cadencer les requêtes envoyées vers l'infrastructure informatique (10) ;

- une étape de substitution d'au moins un marqueur du fichier de base initialisant le fichier d'injection de requêtes par la variable de test calculée, et

- génération (S25), lorsque tous les scénarios de test ont été considérés, du fichier d'injection de requêtes (12), par un module d'ordonnancement (13), ledit fichier d'injection de requêtes (12) comportant une pluralité de requêtes à destination de l'infrastructure informatique (10) à partir d'au moins ladite au moins une variable de test calculée.

2. Procédé selon la revendication 1, **caractérisé en ce que** le fichier de configuration comporte en outre des paramètres de test correspondant à une attente fixe après chaque attente variable.

3. Procédé selon la revendication 1, **caractérisé en ce que** le fichier de configuration comporte en outre un paramètre de test pour chaque scénario correspondant à une variable durée_itération permettant de calculer une durée d'attente variable en fin de scénario en soustrayant une durée réelle du scénario à la valeur de la variable durée_itération.

4. Procédé selon la revendication 1, **caractérisé en ce que** l'au moins une variable de test comporte une durée de l'attente de type 1, correspondant à une attente fixe et simulant une attente courte.

5. Procédé selon la revendication 1, **caractérisé en ce qu'**au moins une variable de test durée_tempo, correspondant à une durée de temporisation en fin de scénario, est utilisée pour calculer un temps d'attente variable en fonction de durées théoriques et réelles d'une itération.

6. Procédé selon l'une des revendications précédentes, comportant le calcul d'au moins une variable de test parmi :

   - un nombre de processus à faire exécuter par l'infrastructure informatique (10),
   - une durée de démarrage de processus à faire exécuter par l'infrastructure informatique (10),
   - une durée de test, et
   - une durée d'itération d'un scénario de test durant le test.

7. Procédé de test d'infrastructure informatique par exécution d'un fichier d'injection de requête (12) afin de mesurer la performance de l'infrastructure informatique (10), le procédé de test d'infrastructure informatique comportant les étapes suivantes de :

   - génération du fichier d'injection (12) de requête selon l'une des revendications 1 à 6;
   - Lecture (S30), par le dispositif d'injection (11) du fichier d'injection de requêtes (12),
   - envoi des requêtes du fichier d'injection à destination de l'infrastructure informatique selon le fichier d'injection, f
   - Exécution des requêtes du fichier d'injection de requêtes (12) par l'infrastructure informatique (10) afin de générer des résultats d'exécution, et
   - Mesure de performance (S33) de l'infrastructure informatique, par des sondes de mesure, en fonction de l'exécution d'au moins une requête par ladite infrastructure informatique (10).

8. Procédé de test d'infrastructure informatique selon la revendication précédente, **caractérisé en ce que** l'exécution des requêtes prend en compte la durée d'attente variable après une requête et **en ce que** ladite durée d'attente variable après une requête est calculée en soustrayant une durée réelle de la requête à la valeur de variable de test durée_requête, selon la formule : durée d'attente variable = durée_requête - (Heure courante - Heure de début de la requête).

9. Procédé selon l'une des revendications précédentes, dans lequel l'infrastructure informatique (10) est un calculateur hautes performances.

**EP 2 798 498 B1**

10. Programme d'ordinateur comportant des instructions pour la mise en œuvre d'un procédé selon l'une des revendications 1 à 9, lorsqu'il est exécuté par un processeur d'un dispositif de génération de fichier d'injection de requêtes ou d'un dispositif de mesure de performance d'une infrastructure informatique.

11. Dispositif (13, 40) de génération de fichier d'injection de requêtes (12) pour un test d'infrastructure informatique (10) ledit test d'infrastructure informatique (10) comportant une exécution des requêtes du fichier d'injection de requêtes (12) afin de mesurer la performance de l'infrastructure informatique (10) en fonction des résultats d'exécution de ces requêtes, le dispositif (13, 40) de génération de fichier d'injection de requêtes comportant une unité de traitement (42) configurée pour

- ire un fichier de configuration de test (15) comportant :
- au moins une définition d'au moins un scénario de test, ledit fichier de configuration (15) comportant au moins un paramètre de test pour chaque scénario, l'au moins un paramètre de test correspondant à une variable durée_requête permettant de calculer une durée d'attente variable après une requête en soustrayant une durée réelle de la requête à la valeur de la variable durée requête ;
- initialiser le fichier d'injection de requêtes (12) à partir d'un fichier de base (14) comportant des marqueurs et ayant un format adapté à un dispositif d'injection (11) avec des champs à remplir;
- calculer au moins une variable de test pour chaque scénario de test du fichier de configuration (15), à partir de l'au moins un paramètre de test pour chaque scénario, ladite variable de test permettant au dispositif d'injection (11) de cadencer les requêtes envoyées vers l'infrastructure informatique (10),
- substituer au moins un marqueur du fichier de base initialisant le fichier d'injection de requêtes par la variable de test calculée, et
- générer, lorsque tous les scénarios de test ont été considérés, le fichier d'injection de requêtes (12), ledit fichier d'injection de requêtes (12) comportant une pluralité de requêtes à destination de l'infrastructure informatique (10), à partir d'au moins ladite au moins une variable de test calculée.

12. Dispositif selon la revendication 11, comportant le calcul d'au moins une variable de test parmi :

- un nombre de processus à faire exécuter par l'infrastructure informatique,
- une durée de démarrage de processus à faire exécuter par l'infrastructure informatique,
- une durée de test, et
- une durée d'itération d'un scénario de test durant le test.

13. Système de mesure de performance d'infrastructure informatique comportant:

- un dispositif de génération de fichier d'injection de requêtes selon l'une des revendications 11 à 12, et
- un dispositif (11, 40) de test d'infrastructure informatique par exécution d'un fichier d'injection de requêtes (12) généré par un dispositif selon l'une des revendications 11 à 12 afin de mesurer la performance de l'infrastructure informatique (10), le dispositif (11,40) de test d'infrastructure informatique (10) comportant une unité de traitement (42) pour lire le fichier d'injection de requêtes (12), envoyer les requêtes du fichier d'injection (12) à destination de l'infrastructure informatique (10) selon le fichier d'injection (12), et pour mesurer une performance de l'infrastructure informatique (10) en fonction de l'exécution des requêtes par ladite infrastructure informatique (10).

**Patentansprüche**

1. Verfahren zum Erzeugen einer Datei zum Einleiten von Abfragen (12) für einen Test einer IT-Infrastruktur (10), wobei der Test einer IT-Infrastruktur (10) eine Ausführung der Abfragen der Dateien zum Einleiten (12) aufweist, um die Leistung der IT-Infrastruktur (10) in Abhängigkeit von den Ergebnissen der Ausführung dieser Abfragen zu messen, wobei das Verfahren zum Erzeugen einer Datei zum Einleiten von Abfragen (12) die folgenden Schritte aufweist:

- Lesen (S20) einer Testkonfigurationsdatei (15) durch eine Verarbeitungseinheit, aufweisend mindestens eine Definition mindestens eines Testszenarios, wobei die Konfigurationsdatei (15) mindestens einen Testparameter für jedes Szenario aufweist, wobei der mindestens eine Testparameter, der einer Zeit_Abfrage-Variablen entspricht, erlaubt, eine variable Wartezeit nach einer Abfrage durch Abzug einer tatsächlichen Zeit der Abfrage vom Wert der Zeit_Abfrage-Variablen zu berechnen;

9

- Initialisieren (S21) der Datei zum Einleiten von Abfragen (12) auf der Basis einer Basisdatei (14), die Marker aufweist und ein Format hat, das an eine Vorrichtung zum Einleiten (11) mit auszufüllenden Feldern angepasst ist;

- Berechnen (S23) mindestens einer Testvariablen für jedes Testszenario der Konfigurationsdatei (15) auf der Basis des mindestens einen Testparameters für jedes Szenario, wobei die Testvariable der Vorrichtung zum Einleiten (11) ermöglicht, die an die IT-Infrastruktur (10) gerichteten Abfragen zu takten;

- einen Schritt des Ersetzens mindestens eines Markers der Basisdatei, die die Datei zum Einleiten von Abfragen initialisiert, durch die berechnete Testvariable, und

- Erzeugen (S25), wenn alle Testszenarien berücksichtigt wurden, der Datei zum Einleiten von Abfragen (12) durch ein Planungsmodul (13), wobei die Datei zum Einleiten von Abfragen (12) eine Vielzahl von Abfragen an die IT-Infrastruktur (10) auf der Basis von mindestens der mindestens einen berechneten Testvariablen aufweist.

2. Verfahren nach Anspruch 1, **dadurch gekennzeichnet, dass** die Konfigurationsdatei ferner Testparameter aufweist, die einer festen Wartezeit nach jeder variablen Wartezeit entsprechen.

3. Verfahren nach Anspruch 1, **dadurch gekennzeichnet, dass** die Konfigurationsdatei ferner einen Testparameter für jedes Szenario aufweist, der einer Zeit_Iteration-Variablen entspricht, die erlaubt, eine variable Wartezeit am Ende des Szenarios durch Abzug einer tatsächlichen Zeit des Szenarios vom Wert der Zeit_Iteration-Variablen zu berechnen

4. Verfahren nach Anspruch 1, **dadurch gekennzeichnet, dass** die mindestens eine Testvariable eine Wartezeit vom Typ 1 aufweist, die einer festen Wartezeit entspricht und eine kurze Wartezeit simuliert.

5. Verfahren nach Anspruch 1, **dadurch gekennzeichnet, dass** mindestens eine Zeit_Zeitverzögerung-Testvariable, die einer Zeitverzögerungszeit am Ende des Szenarios entspricht, verwendet wird, um eine variable Wartezeit in Abhängigkeit von theoretischen und tatsächlichen Zeiten einer Iteration zu berechnen.

6. Verfahren nach einem der vorangehenden Ansprüche, aufweisend die Berechnung mindestens einer Testvariablen aus:

   - einer Anzahl von Prozessen, die von der IT-Infrastruktur (10) auszuführen sind,
   - einer Startzeit eines Prozesses, der von der IT-Infrastruktur (10) auszuführen ist,
   - einer Testzeit, und
   - einer Iterationszeit eines Testszenarios während des Tests.

7. Testverfahren einer IT-Infrastruktur durch Ausführen einer Datei zum Einleiten einer Abfrage (12), um die Leistung der IT-Infrastruktur (10) zu messen, wobei das Testverfahren der IT-Infrastruktur die folgenden Schritte aufweist:

   - Erzeugen der Datei zum Einleiten einer Abfrage (12) nach einem der Ansprüche 1 bis 6;
   - Lesen (S30), durch die Vorrichtung zum Einleiten (11), der Datei zum Einleiten von Abfragen (12),
   - Versenden der Abfragen der Datei zum Einleiten an die IT-Infrastruktur gemäß der Datei zum Einleiten,
   - Ausführen der Abfragen der Datei zum Einleiten von Abfragen (12) durch die IT-Infrastruktur (10), um Ausführungsergebnisse zu erzeugen, und
   - Messen der Leistung (S33) der IT-Infrastruktur durch Messsonden in Abhängigkeit von der Ausführung von mindestens einer Abfrage durch die IT-Infrastruktur (10).

8. Verfahren zum Test einer IT-Infrastruktur nach vorangehendem Anspruch, **dadurch gekennzeichnet, dass** die Ausführung der Abfragen die variable Wartezeit nach einer Abfrage berücksichtigt und dass die variable Wartezeit nach einer Abfrage durch Abzug einer tatsächlichen Zeit der Abfrage vom Wert der Zeit_Abfrage-Testvariablen gemäß der Formel variable Wartezeit = Zeit_Abfrage - (aktueller Zeitpunkt - Zeitpunkt des Beginns der Abfrage) berechnet wird.

9. Verfahren nach einem der vorangehenden Ansprüche, wobei die IT-Infrastruktur (10) ein Hochleistungsrechner ist.

10. Rechnerprogramm, aufweisend Befehle für die Durchführung eines Verfahrens nach einem der Ansprüche 1 bis 9, wenn es von einem Prozessor einer Vorrichtung zum Erzeugen einer Datei zum Einleiten von Abfragen oder einer Vorrichtung zum Messen der Leistung einer IT-Infrastruktur ausgeführt wird.

**11.** Vorrichtung (13, 40) zum Erzeugen einer Datei zum Einleiten von Abfragen (12) für einen Test einer IT-Infrastruktur (10), wobei der Test einer IT-Infrastruktur (10) eine Ausführung der Abfragen der Datei zum Einleiten von Abfragen (12) aufweist, um die Leistung der IT-Infrastruktur (10) in Abhängigkeit von den Ergebnissen der Ausführung dieser Abfragen zu messen, wobei die Vorrichtung (13, 40) zum Erzeugen einer Datei zum Einleiten von Abfragen eine Verarbeitungseinheit (42) aufweist, die konfiguriert ist, um:

- eine Testkonfigurationsdatei (15) zu lesen, aufweisend:
- mindestens eine Definition mindestens eines Testszenarios, wobei die Konfigurationsdatei (15) mindestens einen Testparameter für jedes Szenario aufweist, wobei der mindestens eine Testparameter, der einer Zeit_Abfrage-Variablen entspricht, erlaubt, eine variable Wartezeit nach einer Abfrage durch Abzug einer tatsächlichen Zeit der Abfrage vom Wert der Zeit_Abfrage-Variablen zu berechnen;
- Initialisieren der Datei zum Einleiten von Abfragen (12) auf der Basis einer Basisdatei (14), die Marker aufweist und ein Format hat, das an eine Vorrichtung zum Einleiten (11) mit auszufüllenden Feldern angepasst ist;
- Berechnen mindestens einer Testvariablen für jedes Testszenario der Konfigurationsdatei (15) auf der Basis des mindestens einen Testparameters für jedes Szenario, wobei die Testvariable der Vorrichtung zum Einleiten (11) ermöglicht, die an die IT-Infrastruktur (10) gerichteten Abfragen zu takten,
- Ersetzen mindestens eines Markers der Basisdatei, die die Datei zum Einleiten von Abfragen initialisiert, durch die berechnete Testvariable, und
- Erzeugen, wenn alle Testszenarien berücksichtigt wurden, der Datei zum Einleiten von Abfragen (12), wobei die Datei zum Einleiten von Abfragen (12) eine Vielzahl von Abfragen an die IT-Infrastruktur (10) auf der Basis von mindestens der mindestens einen berechneten Testvariablen aufweist.

**12.** Vorrichtung nach Anspruch 11, aufweisend die Berechnung mindestens einer Testvariablen aus:

- einer Anzahl von Prozessen, die von der IT-Infrastruktur auszuführen sind,
- einer Startzeit eines Prozesses, der von der IT-Infrastruktur auszuführen ist,
- einer Testzeit, und
- einer Iterationszeit eines Testszenarios während des Tests.

**13.** System zum Messen der Leistung einer IT-Infrastruktur, aufweisend:

- eine Vorrichtung zum Erzeugen einer Datei zum Einleiten von Abfragen nach einem der Ansprüche 11 bis 12, und
- eine Vorrichtung zum Testen (11, 40) einer IT-Infrastruktur durch Ausführen einer Datei zum Einleiten von Abfragen (12), die von der Vorrichtung nach einem der Ansprüche 11 bis 12 erzeugt wurde, um die Leistung der IT-Infrastruktur (10) zu messen, wobei die Vorrichtung zum Testen (11, 40) einer IT-Infrastruktur (10) eine Verarbeitungseinheit (42) aufweist, um die Datei zum Einleiten von Abfragen (12) zu lesen, die Abfragen der Datei zum Einleiten (12) an die IT-Infrastruktur (10) gemäß der Datei zum Einleiten (12) zu schicken, und um eine Leistung der IT-Infrastruktur (10) in Abhängigkeit von der Ausführung der Abfragen durch die IT-Infrastruktur (10) zu messen.

**Claims**

**1.** A method for generating a request injection file (12) for an IT infrastructure test (10), said IT infrastructure test (10) including an execution of the requests from the injection file (12) in order to measure the performance of the IT infrastructure (10) based on the results of execution of these requests, the method for generating a request injection file (12) including the following steps of:

- reading (S20) a test configuration file (15), by a processing unit, including at least one definition of at least one test scenario, said configuration file (15) including at least one test parameter for each scenario, the at least one test parameter corresponding to a duration-request variable allowing to calculate a variable waiting duration after a request by subtracting an actual duration of the request from the value of the duration-request variable;
- initializing (S21) the request injection file (12) from a base file (14) including markers, and having a format adapted to an injection device (11) with fields to fill in;
- calculating (S23) at least one test variable for each test scenario of the configuration file (15), from the at least one test parameter for each scenario, said test variable allowing the injection device (11) to clock the requests sent to the IT infrastructure (10);

- a step of substituting at least one marker of the base file initializing the request injection file with the calculated test variable, and
- generating (S25), when all the test scenarios have been considered, the request injection file (12), by a scheduling module (13), said request injection file (12) including a plurality of requests to the IT infrastructure (10) from at least said at least one calculated test variable.

2. The method according to claim 1, **characterized in that** the configuration file further includes test parameters corresponding to a fixed wait after each variable wait.

3. The method according to claim 1, **characterized in that** the configuration file further includes a test parameter for each scenario corresponding to a duration_iteration variable allowing to calculate a variable waiting duration at the end of the scenario by subtracting an actual duration of the scenario from the value of the duration_iteration variable.

4. The method according to claim 1, **characterized in that** the at least one test variable includes a waiting duration of the type 1, corresponding to a fixed wait and simulating a short wait.

5. The method according to claim 1, **characterized in that** at least one duration_tempo test variable, corresponding to a delay time at the end of the scenario, is used to calculate a variable waiting time based on theoretical and actual durations of one iteration.

6. The method according to any of the preceding claims, including the calculation of at least one test variable among:

   - a number of processes to be executed by the IT infrastructure (10),
   - a duration of start of processes to be executed by the IT infrastructure (10),
   - a test duration, and
   - a duration of iteration of a test scenario during the test.

7. A method for testing IT infrastructure by execution of a request injection file (12) in order to measure the performance of the IT infrastructure (10), the method for testing IT infrastructure including the following steps of:

   - generating the request injection file (12) according to any of claims 1 to 6;
   - reading (S30), by the injection device (11), the request injection file (12),
   - sending requests from the injection file to the IT infrastructure according to the injection file,
   - executing requests from the request injection file (12) by the IT infrastructure (10) in order to generate execution results, and
   - measuring the performance (S33) of the IT infrastructure, using measurement probes, based on the execution of at least one request by said IT infrastructure (10).

8. The method for testing IT infrastructure according to the preceding claim, **characterized in that** the execution of the requests takes into account the variable waiting duration after a request and **in that** said variable waiting duration after a request is calculated by subtracting an actual duration of the request from the test variable value duration_request, according to the formula: variable waiting duration = duration-request - (Current time - Start time of the request).

9. The method according to any of the preceding claims, wherein the IT infrastructure (10) is a high performance calculator.

10. A computer program including instructions for the implementation of a method according to any of claims 1 to 9, when executed by a processor of a device for generating a request injection file or a device for measuring the performance of an IT infrastructure.

11. A device (13, 40) for generating a request injection file (12) for an IT infrastructure test (10), said IT infrastructure test (10) including an execution of the requests from the request injection file (12) in order to measure the performance of the IT infrastructure (10) based on the execution results of these requests, the device (13, 40) for generating a request injection file including a processing unit (42) configured to:

   - read a test configuration file (15) including at least one definition of at least one test scenario, said configuration file (15) including at least one test parameter for each scenario, the at least one test parameter corresponding to a duration-request variable allowing to calculate a variable waiting duration after a request by subtracting an actual duration of the request from the value of the duration-request variable;

- initialize the request injection file (12) from a base file (14) including markers and having a format adapted to an injection device (11) with fields to fill;
- calculate at least one test variable for each test scenario of the configuration file (15), from the at least one test parameter for each scenario, said test variable allowing the injection device (11) to clock the requests sent to the IT infrastructure (10),
- substitute at least one marker from the base file initializing the request injection file by the calculated test variable, and
- generate, when all the test scenarios have been considered, the request injection file (12), said request injection file (12) including a plurality of requests to the IT infrastructure (10), from at least said at least one calculated test variable.

12. The device according to claim 11, including the calculation of at least one test variable among:

- a number of processes to be executed by the IT infrastructure,
- a duration of start of processes to be executed by the IT infrastructure,
- a test duration, and
- a duration of iteration of a test scenario during the test.

13. A system for measuring the performance of an IT infrastructure including:

- a device for generating a request injection file according to any of claims 11 to 12, and
- a device (11, 40) for testing IT infrastructure by the execution of a request injection file (12) generated by a device according to any of claims 11 to 12 in order to measure the performance of the IT infrastructure (10), the device (11, 40) for testing the IT infrastructure (10) including a processing unit (42) for reading the request injection file (12), sending the requests from the injection file (12) to the IT infrastructure (10) according to the injection file (12), and measuring a performance of the IT infrastructure (10) based on the execution of the requests by said IT infrastructure (10).

## Fig.1

14

template

(fichier de base)

config

15

(fichier de
configuration
globale)

Module
d'ordonnancement

13

12

benchmark

(fichier d'injection instancié)

Dispositif d'injection

11

10

Infrastructure testée

Lecture fichier de
configuration

S20

Initialisation du
fichier d'injection

S21

S22

Autre
Scénario ?

NON

Générer fichier
d'injection

S25

OUI

Calcul des variables
d'injection

S23

Intégration dans le
fichier d'injection

S24

## Fig.2

# Fig.3

```
┌─────────────────────────┐
│   Lecture fichier        │──── S30
│   injection              │
└─────────────────────────┘
            │
            ▼
S31 ───◇─────────────────────◇   NON
       │     Scénario ?      │
       ◇─────────────────────◇
            │ OUI
            ▼
┌─────────────────────────┐
│   Envoi requêtes         │──── S32
└─────────────────────────┘
            │
            ▼
┌─────────────────────────┐
│   Mesure                 │──── S33
└─────────────────────────┘

┌─────────────────────────┐
│   Stockage résultats     │──── S34
└─────────────────────────┘
            │
            ▼
┌─────────────────────────┐
│   Analyse                │──── S35
└─────────────────────────┘
            │
            ▼
┌─────────────────────────┐
│   Génération rapport     │──── S36
└─────────────────────────┘
```

# Fig.4

```
┌───────────────────────────────────────────┐
│     41          42           43            │
│  ┌───────┐   ┌───────┐    ┌───────┐        │
│  │  MEM  │   │ PROC  │    │  COM  │        │
│  └───────┘   └───────┘    └───────┘        │
└───────────────────────────────────────────┘
                  40
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090287791 A

- US 20080126390 A